# EUROPEAN PATENT SPECIFICATION

(11) **EP 4 433 191 B1**
(45) Date of publication and mention of the grant of the patent: **01.04.2026**
(21) Application number: 22896795.6
(22) Date of filing: 21.11.2022
(51) Int. Cl.: B01D 35/30, B01D 35/02, C02F 1/00, C02F 1/40, B01D 33/06, B01D 33/76, B01D 33/80, B01D 35/16

(54) **PORTABLE FLUID FILTERING APPARATUS**
TRAGBARE FLUIDFILTERVORRICHTUNG
APPAREIL DE FILTRATION DE FLUIDE PORTATIF

(30) Priority: 19.11.2021 US 202163281351 P
(43) Date of publication of application: 25.09.2024
(73) Proprietor: Water Tech, LLC, East Brunswick, NJ 08816 (US)
(72) Inventor: ERLICH, Guy, West Allenhurst, NJ 07711 (US); KUNWAR, Sethi, South River, NJ 08882 (US); MORALES, Timothy, Rumson, NJ 07760 (US); LORYS, Thomas, Linden, NJ 07036 (US); CAMISI, Daniel, Tabernacle, NJ 08088 (US); ELLIOTT, Curtis, Washington, NJ 07882 (US)
(74) Representative: Cabinet Beau de Loménie
(86) International application number: PCT/US2022/080248
(87) International publication number: WO 2023/092125

(56) References cited:
- WO-A1-2020/167623
- AU-A1- 2010 266 804
- US-A- 4 601 821
- US-A- 4 962 559
- US-A- 6 013 178
- US-A1- 2008 190 870
- US-A1- 2011 247 970
- US-A1- 2015 337 555
- US-A1- 2017 138 076
- US-A1- 2017 138 076
- US-A1- 2020 222 833
- US-B1- 7 437 790

## Description

### TECHNICAL FIELD

The present disclosure is directed to fluid cleaning and, more particularly, to a portable device for filtering fluid, for example, in skimmer baskets.

### BACKGROUND

Manmade bodies of fluid such as inground and above ground pools typically have one or more debris collection devices intended to capture and collect solid debris from the fluid. A prominent example of such devices are skimmer baskets, which are generally located around the periphery of a pool at one or more locations. They are frequently accessed through an opening in the surrounding pool deck. Because these skimmer baskets have a limited capacity, they will become clogged and cease to operate effectively if they are not cleaned on a regular basis.

Because skimmer baskets are designed to capture all manner of solid debris within the fluid, there may be a wide range of items within the skimmer basket including items like decaying organic matter, insects, or even small rodents that pool owners would prefer not to encounter and certainly not to touch. Therefore, cleaning skimmer baskets can be an unpleasant task. Document US2017/138076 Al discloses a modular pump and filter system and a method of filtering fluid from an aquatic application. Document US2020/222833 Al discloses a submersible water filtration apparatus with multi-stage filtration. Document US4601821 A discloses a freestanding aquarium filter.

While there are products available that clean skimmer baskets, these products suffer from significant limitations. Many must be manually operated and are not readily portable. They frequently depend on hoses or electrical cords and are therefore heavy and difficult to manipulate. This is particularly problematic as most pools will have more than one skimmer basket around the pool perimeter requiring that any device used to clean the skimmer baskets should be sufficiently portable to be moved quickly from one skimmer basket to the next.

Therefore, there is a need for an improved apparatus and method of filtering debris from fluid in enclosed spaces, for example, skimmer baskets.

### SUMMARY

The invention provides a portable fluid filtering apparatus according to claim 1. According to an aspect of the present disclosure, there is provided a portable fluid filtering apparatus that includes a debris chamber with an exhaust; a rotor that draws in a fluid from outside the debris chamber; a filter positioned between the exhaust port and the rest of the debris chamber; an intake port in fluid communication with the debris chamber and wherein the rotor draws the fluid into the debris chamber through the intake port; and a drive system configured to rotate the rotor that includes a drive shaft connected to the rotor, a motor to rotate the drive shaft, and a power source for the motor.

This aspect is merely illustrative of the innumerable aspects associated with the present disclosure and should not be deemed as limiting in any manner. This and other aspects, features and advantages of the present disclosure will become apparent from the following detailed description when taken in conjunction with the referenced drawings.

### BRIEF DESCRIPTION OF THE DRAWINGS

Reference is now made more particularly to the drawings, which illustrate the best presently known mode of carrying out the disclosure and wherein similar reference characters indicate the same parts throughout the views.
Fig. 1 is a perspective view of a portable fluid filtering apparatus according to an embodiment of the present disclosure.
Fig. 2 is a front view of the embodiment of Fig. 1.
Fig. 3 is a back view of the embodiment of Fig. 1.
Fig. 4 is a left-side view of the embodiment of Fig. 1.
Fig. 5 is a right-side view of the embodiment of Fig. 1.
Fig. 6 is a top view of the embodiment of Fig. 1.
Fig. 7 is a bottom view of the debris chamber of the embodiment of Fig. 1.
Fig. 8 is an exploded assembly view of the embodiment of Fig. 1.
Fig. 9 is a section view of the embodiment of Fig. 1.
Fig. 10 is an exploded assembly view of a portable fluid filtering apparatus according to another embodiment of the present disclosure.
Fig. 11 is a schematic illustration of the flow of fluid and debris within an embodiment of a portable fluid filtering apparatus according to the present disclosure.
Fig. 12 is a partially transparent perspective view of a portable fluid filtering apparatus incorporating an auger according to another embodiment of the present disclosure.
Fig. 13 is a bottom perspective view of a portable fluid filtering apparatus incorporating a variable exhaust port valve according to another embodiment of the present disclosure.
Fig. 14 is a perspective view of a portable fluid filtering apparatus incorporating a directional port conduit according to another embodiment of the present disclosure.
Fig. 15 is a perspective view of a portable fluid filtering apparatus incorporating multiple intake ports according to another embodiment of the present disclosure.
Fig. 16 is a perspective view of a portable fluid filtering apparatus incorporating a controlled flow restrictor according to another embodiment of the present disclosure.
Fig. 16A is an enlargement of a portion of Fig. 16 further showing the controlled flow restrictor.
Fig. 17 is a perspective view of a portable fluid filtering apparatus with a crevice vacuum cleaning accessory attached thereto according to another embodiment of the present disclosure.
Fig, 18 a perspective view of a portable fluid filtering apparatus with a brush vacuum cleaning accessory attached thereto according to another embodiment of the present disclosure.
Fig. 19 a perspective view of a portable fluid filtering apparatus with a flexible hose cleaning accessory attached thereto according to another embodiment of the present disclosure.

### DETAILED DESCRIPTION

The following description of technology is merely exemplary in nature of the subject matter, manufacture and use of one or more inventions, and is not intended to limit the scope, application, or uses of any specific invention claimed in this application or in such other applications as may be filed claiming priority to this application, or patents issuing therefrom. The following definitions and non-limiting guidelines must be considered in reviewing the description of the technology set forth herein.

The headings (such as "Introduction" and "Summary") and sub-headings used herein are intended only for general organization of topics within the present disclosure and are not intended to limit the disclosure of the technology or any aspect thereof. In particular, subject matter disclosed in the "Introduction" may include novel technology and may not constitute a recitation of prior art. Subject matter disclosed in the "Summary" is not an exhaustive or complete disclosure of the entire scope of the technology or any embodiments thereof. Classification or discussion of a material within a section of this specification as having a particular utility is made for convenience, and no inference should be drawn that the material must necessarily or solely function in accordance with its classification herein when it is used in any given composition.

The citation of references herein does not constitute an admission that those references are prior art or have any relevance to the patentability of the technology disclosed herein. All references cited in the "Description" section of this specification are hereby incorporated by reference in their entirety.

The description and specific examples, while indicating embodiments of the technology, are intended for purposes of illustration only and are not intended to limit the scope of the technology. Moreover, recitation of multiple embodiments having stated features is not intended to exclude other embodiments having additional features, or other embodiments incorporating different combinations of the stated features. Specific examples are provided for illustrative purposes of how to make and use the apparatus and systems of this technology and, unless explicitly stated otherwise, are not intended to be a representation that given embodiments of this technology have, or have not, been made or tested.

As used herein, the word "include," and its variants, is intended to be non-limiting, such that recitation of items in a list is not to the exclusion of other like items that may also be useful in the materials, compositions, devices, and methods of this technology. Similarly, the terms "can" and "may" and their variants are intended to be non-limiting, such that recitation that an embodiment can or may comprise certain elements or features does not exclude other embodiments of the present technology that do not contain those elements or features.

"A" and "an" as used herein indicate "at least one" of the item is present; a plurality of such items may be present, when possible. "About" when applied to values indicates that the calculation or the measurement allows some slight imprecision in the value (with some approach to exactness in the value; approximately or reasonably close to the value; nearly). If, for some reason, the imprecision provided by "about" is not otherwise understood in the art with this ordinary meaning, then "about" as used herein indicates at least variations that may arise from ordinary methods of measuring or using such parameters. In addition, disclosure of ranges includes disclosure of all distinct values and further divided ranges within the entire range.

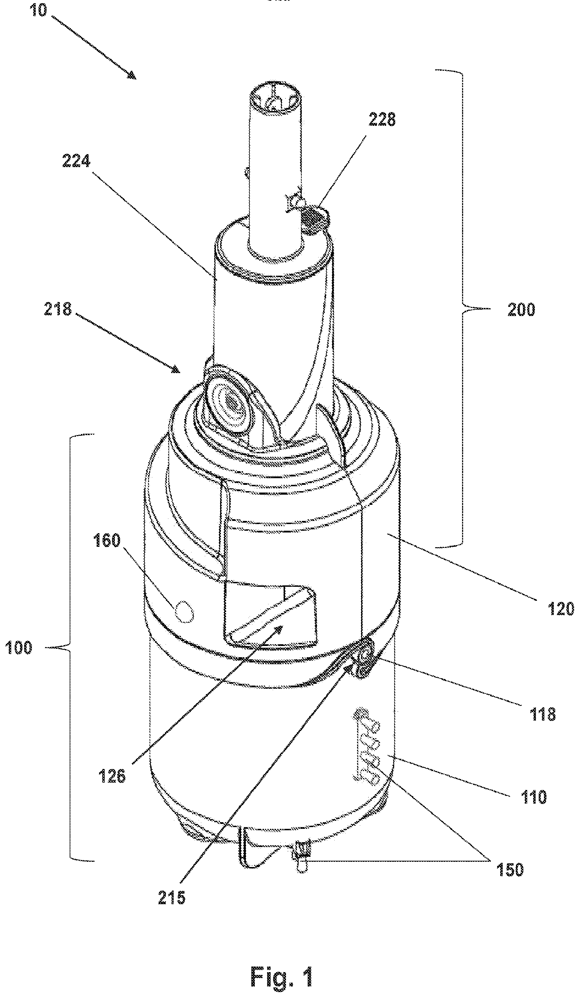

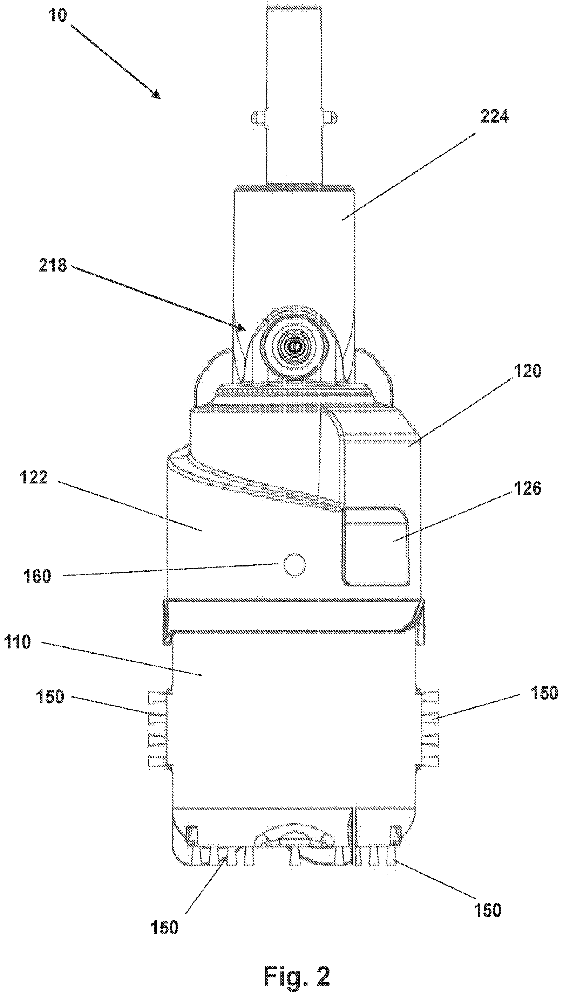

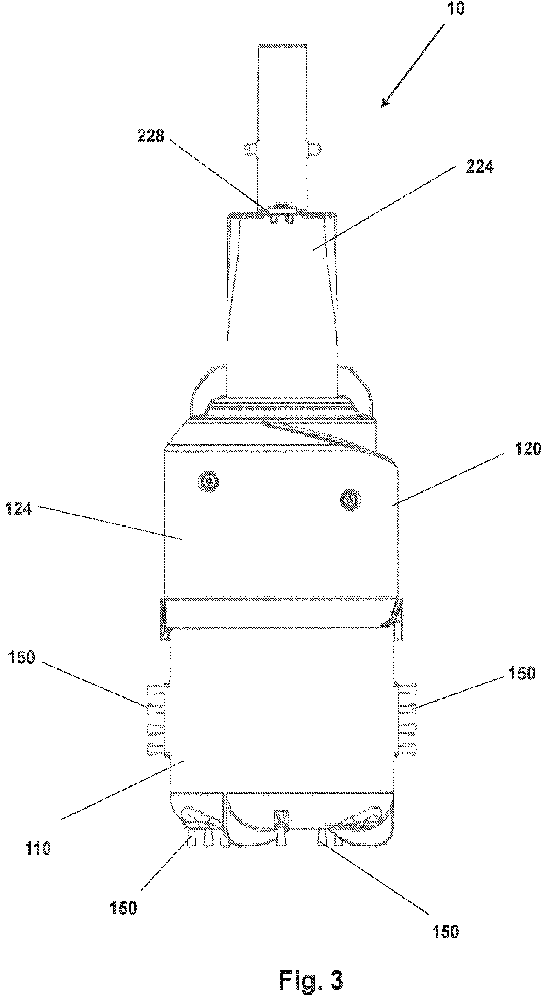

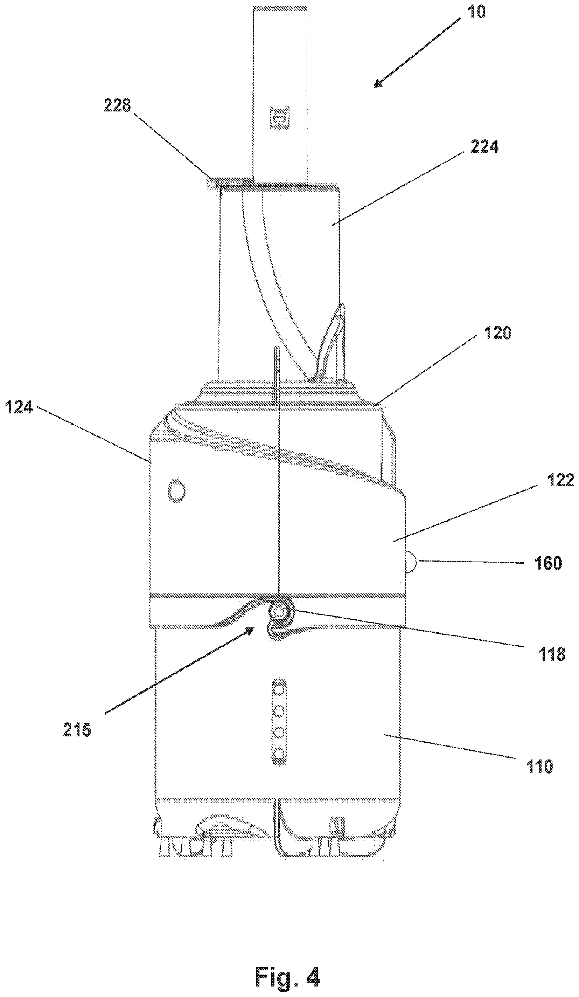

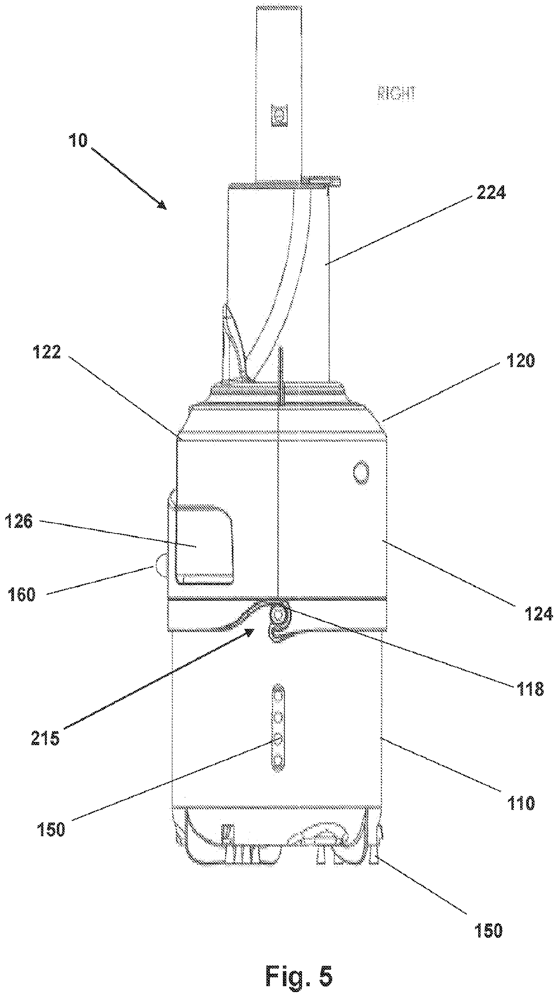

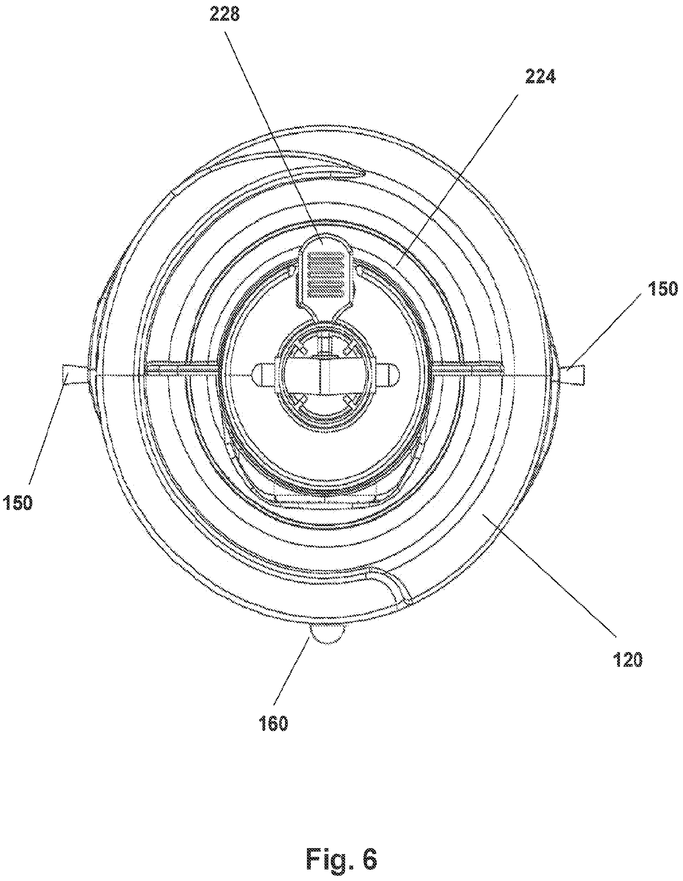

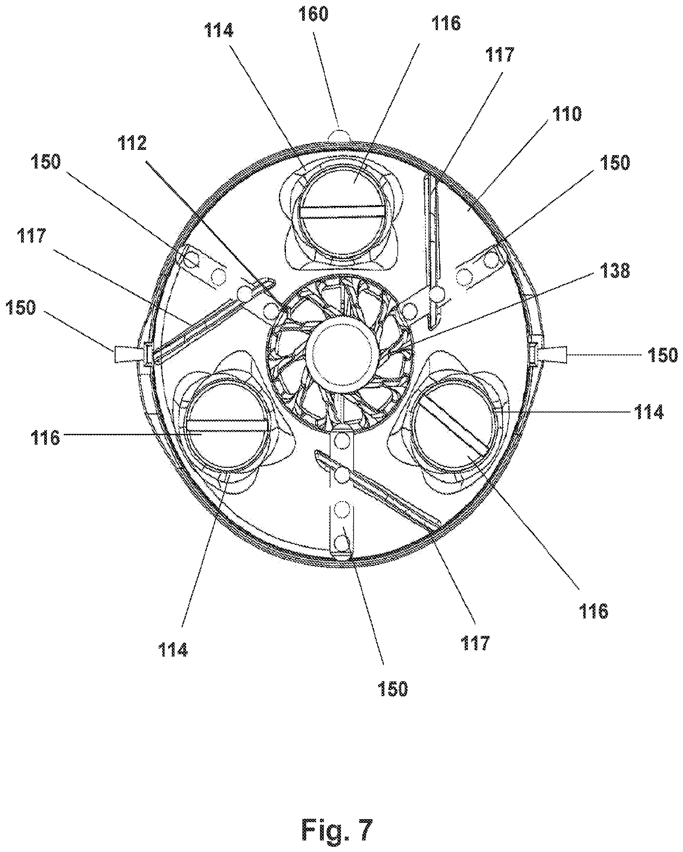

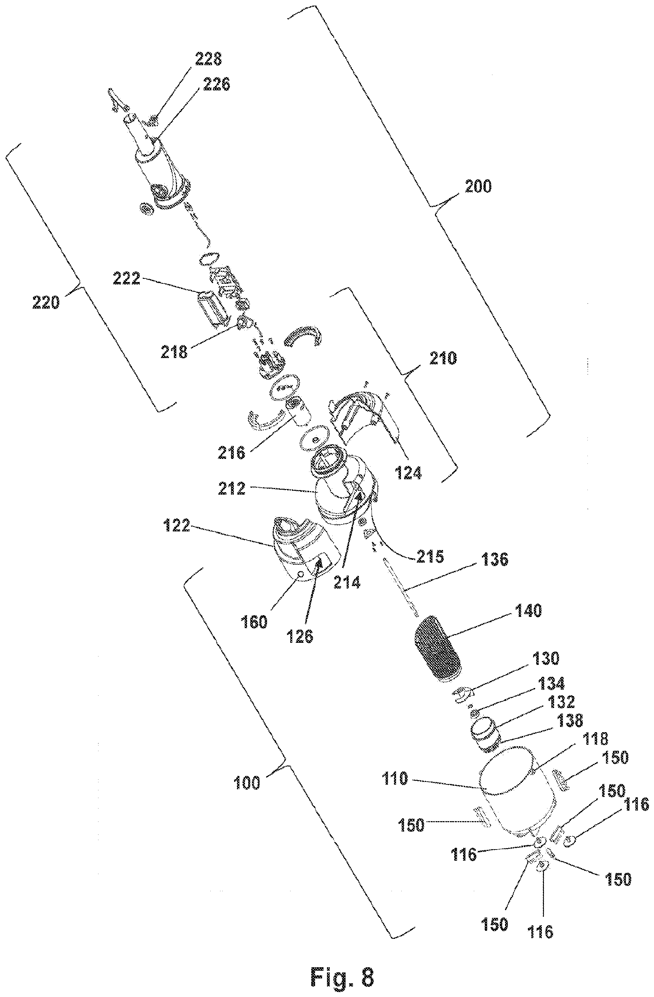

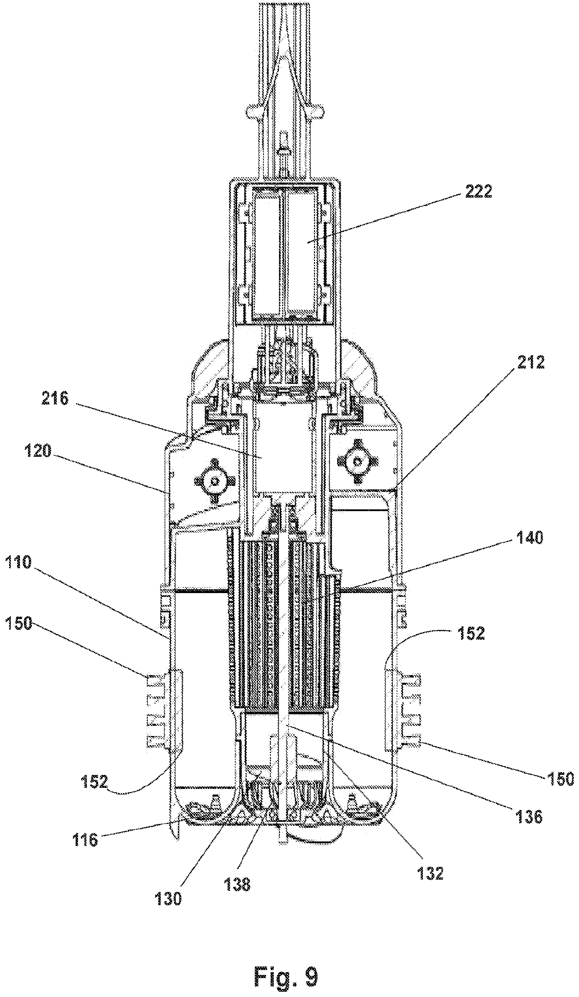

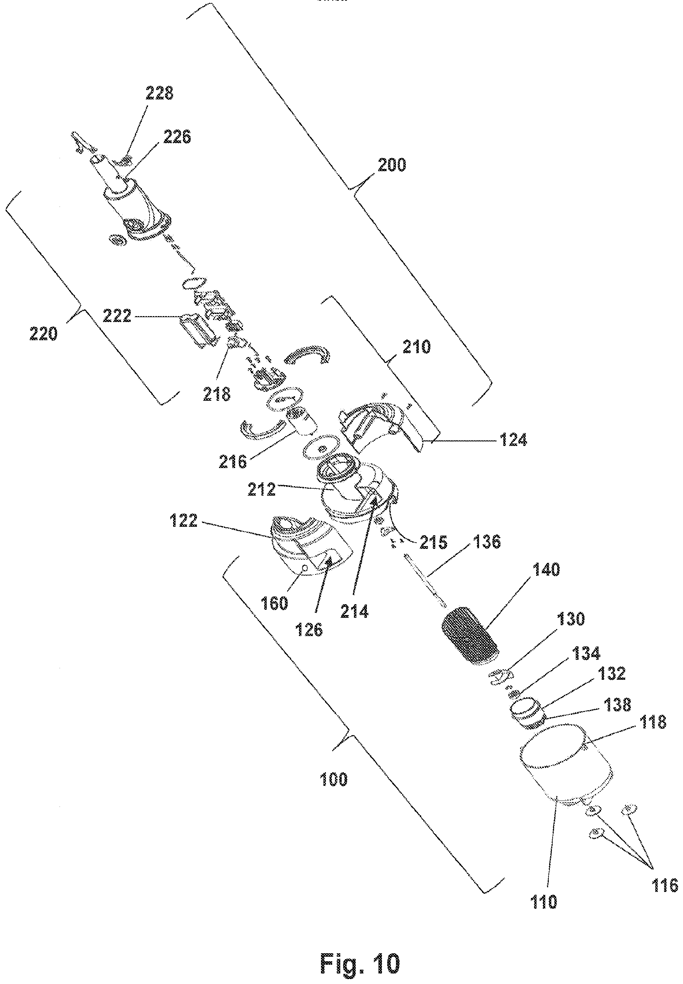

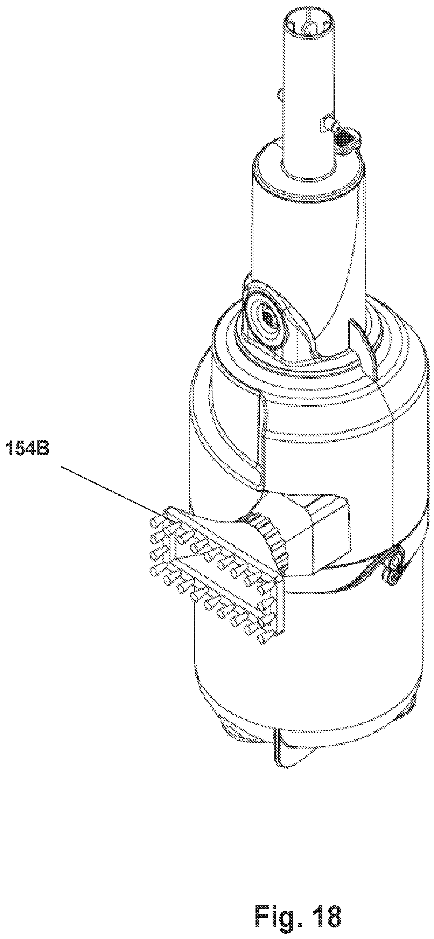

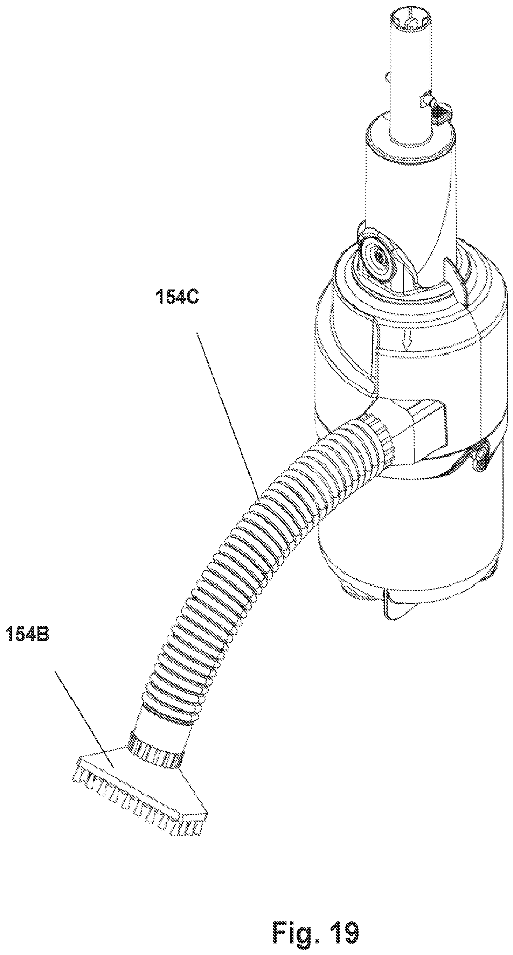

Figs. 1 - 19 illustrate embodiments of a portable fluid filtering apparatus 10 according to the present disclosure. The term "portable" includes but is not limited to handheld embodiments. Embodiments of the portable fluid filtering apparatus 10 are advantageously configured to allow for in-place cleaning of various features and aspects of pools and similar bodies of contained water. This may include pool skimmer baskets, including hands-free removal of the debris within the skimmer baskets. The portable fluid filtering apparatus 10 includes two primary assemblies: an intake/filter/discharge system 100 and a drive system 200. The drive system 200 provides power to the intake/filter/discharge system 100.

Broadly, the intake/filter/discharge system 100 contains elements to allow for automatically drawing in fluid and debris from the skimmer basket, filtering out the debris, and discharging the now debris-free fluid back to the skimmer basket. The primary components of the intake/filter/discharge system 100 include a debris chamber 110, an upper shell 120, a rotor 130, and a filter 140.

The debris chamber 110 comprises a tank with an open interior space and is at least partially enclosed on a bottom end while having an open top end to allow for the insertion of other components of the intake/filter/discharge system 100 as described below. The bottom end of the debris chamber 110 may have a lower port (or aperture) 112 that may in some embodiments serve as an exhaust port. While the lower port 112 may be referred to herein as the exhaust port in the context of the illustrated embodiments, it should be understood that the lower port may alternatively serve as an intake port in other embodiments and that such other embodiments are contemplated within the scope of the present disclosure. Furthermore, in embodiments incorporating a reversable motor 216 and rotor 130, the lower port 112 may alternately serve as both the intake and exhaust ports. The lower end of the debris chamber 110 may also have one or more drain ports 114. Each drain port 114 may have a drain valve 116. While the debris chamber 110 is depicted in the illustrated embodiments as a cylinder, it may comprise any suitable size, shape, orientation, or configuration as appropriate for a given application or environment.

The exhaust port 112 provides an outlet for fluid that has passed through the intake/filter/discharge system 100 and is now debris-free to exit the system and return to the skimmer basket. The exhaust port 112 is preferably sized to allow for a flow rate of exhausted fluid sufficient to avoid creating any back pressure within the intake/filter/discharge system 100, which would interfere with operation of the rotor 130.

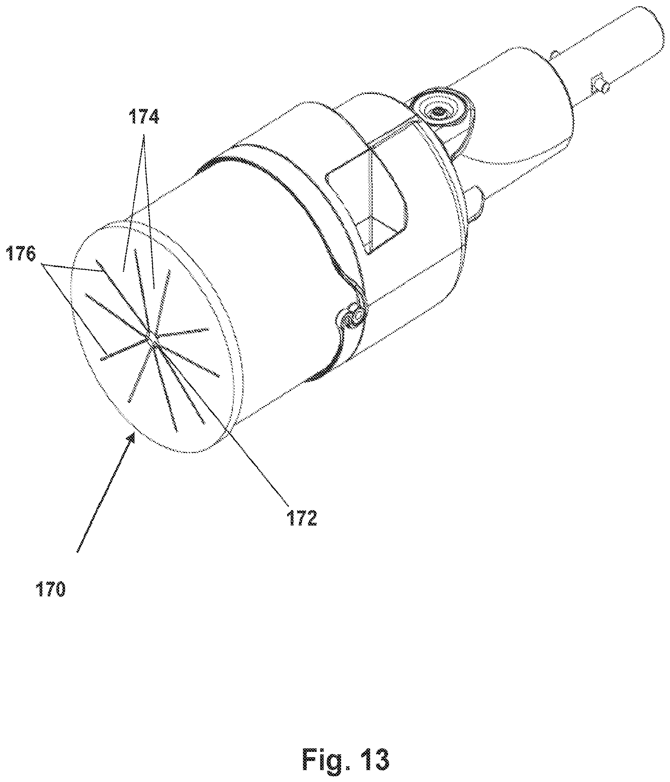

In some embodiments, the exhaust port 112 may include a valve 170, which may serve multiple purposes: (a) in embodiments utilizing an auger 130A as described below, the valve 170 prevents debris from falling out of the debris chamber 110; and (b) it may allow for a variable exhaust flow rate. Fig. 13 illustrates one example of such an exhaust port valve 170. In this example, the valve 170 is provided with an open central orifice 172. The central orifice 172 allows for a minimum exhaust flow rate. The valve 170 further includes a series of flaps 174 created by radial slits 176 leading to the open central orifice 172. As the pressure and flow rate of fluid within the debris chamber 110 increases, the flaps 174 are pushed outward in proportion to the pressure exerted on the variable exhaust port valve 170. The opening of the flaps 174 enlarges the open portion of the variable exhaust port valve 170 to allow for a greater exhaust flow rate. Other valve mechanisms may be utilized and may be automatically adjusted or user adjusted.

The drain port(s) 114 allow for any residual fluid within the debris chamber to drain as the portable fluid filtering apparatus 10 is lifted out of the skimmer basket following a cleaning cycle. The drain port(s) 114 may be located toward the periphery of the bottom end of the debris chamber 110 outside of the exhaust port 112. The drain valves 116 remain closed during operation of the portable fluid filtering apparatus 10 and are able to open once operation of the system has stopped to allow the residual fluid to drain once the unit is removed from the fluid. In the illustrated embodiment, the drain valves 116 are resilient umbrella valves.

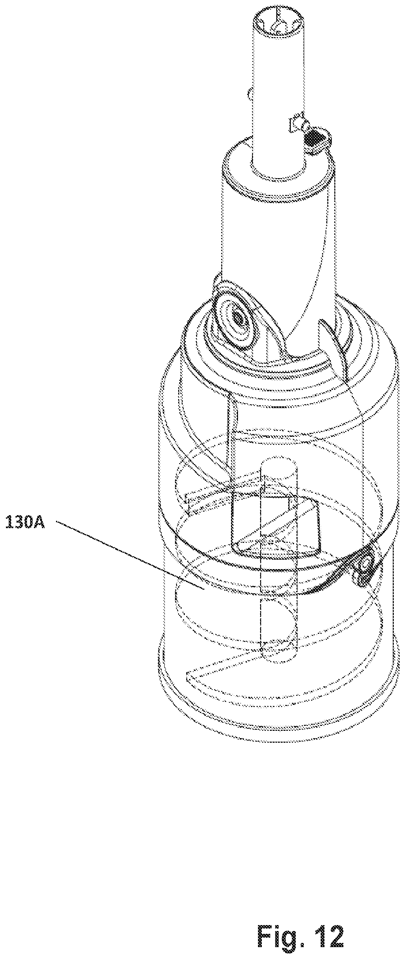

The intake/filter/discharge system 100 further includes the rotor 130 and a rotor cover 132. The rotor 130 is contained and able to spin freely within the rotor cover 132. The rotor cover 132 may be secured adjacent to the exhaust port 112. In this configuration, operation of the rotor 130 draws fluid into the debris chamber 110, into the rotor cover 132, and out the exhaust port. A rotor bearing 134 may be provided to ensure smooth rotation of the rotor 130 and support a rotor drive shaft 136 that rotates the rotor 130. The rotor 130 may, for example, be an impeller, as shown in Figs. 1 - 11, an auger 130A, as shown in Fig. 12, or other mechanisms that are configured to draw fluid into the debris chamber, for example, a propeller. Furthermore, while the illustrated embodiments of Figs. 1 - 11make use of an axial impeller, more specifically, a pitched blade impeller, the use of a radial impeller is also contemplated within the scope of the present disclosure.

In the embodiments of Fig. 1 - 11, a filter 140 is positioned upstream of the rotor 130 and rotor cover 132. In alternate embodiments, the filter 140 may be located downstream of the rotor 130; or in embodiments having a reversable motor 216 and rotor 130, the location of the filter relative to the rotor (upstream or downstream) may alternate based on the rotational direction of the rotor 130. Preferably, the filter 140 and rotor cover 132 are connected in a manner to create a seal between the two components that is sufficient to prevent passage of debris and fluid between the joint where the filter 140 and rotor cover 132 meet. The filter 140 is preferably cylindrical with a mesh surface that is appropriately sized to allow fluid to pass freely through the filter while preventing passage of solid debris. The mesh size may be varied depending on the particular application requirements. The filter 140 may be fixed in position, able to freely rotate, or connected with the drive system for driven rotation during operation.

Further, a pre-filter (not shown) may be used in combination with the filter 140. The pre-filter, if provided, may be a disposable or replaceable filter or may be removable for cleaning and reuse. A post-filter (also not shown) may also be incorporated into embodiments of the apparatus in combination with a pre-filter or by itself A post-filter may be located at the outlet of the impeller, for example, on the rotor cover 132, and may, as an example, be a filter bag. The pre-filter may be suitable for preventing larger debris from passing through the filter 140, while the post-filter may be suitable for capturing smaller debris.

The intake/filter/discharge system 100 further includes an upper shell 120 that may be composed of two or more shell pieces that are joined together. In the illustrated embodiment, the upper shell 120 includes a front shell 122 and a back shell 124 that are secured together by screws or other fasteners. The upper shell 120 rests directly on an upper rim of the debris chamber 110 to form an enclosed space between the upper shell 120 and debris chamber 110. In order to secure the upper shell 120 to the debris chamber 110, the outer upper rim of the debris chamber 110 may be provided with one or more locking tabs 118 that cooperate with mating locking slots 215 located on the inner lower rim of either the upper shell 120 or a motor assembly housing 212 located within the upper shell 120, as described below. The upper shell 120 and/or debris chamber 110 may be rotated relative to one another to engage the locking tabs 118 within the locking slots 215 to secure the upper shell 120 and debris chamber 110 together. Other methods of assembly are contemplated within the scope of the present disclosure and the foregoing example should not be considered as limiting the scope of the invention.

In the illustrated embodiments of Figs. 1 - 11, upper shell 120 includes at least one upper port (or aperture) 126 that may in some embodiments serve as an intake port. While the upper port 126 may be referred to herein as the intake port in the context of the illustrated embodiments, it should be understood that the upper port may alternatively serve as an exhaust port in other embodiments and that such other embodiments are contemplated within the scope of the present disclosure. Furthermore, in embodiments incorporating a reversable motor 216 and rotor 130, the upper port 112 may alternately serve as both the intake and exhaust ports. The intake port 126 provides a flow path from the exterior of the portable fluid filtering apparatus 10 to the interior space of the debris chamber 110 and upper shell 120. While the intake port 126 is shown as part of the upper shell 120 in the illustrated embodiment, it may be located in other portions of the intake/filter/discharge system 100, for example, the side wall or bottom of the debris chamber. The size of the intake port 126 may be varied, alone or in combination with adjustments to the size of the exhaust port 112 and/or the type and size of the rotor 130, to achieve a desired flow rate or other flow characteristics. In addition, the locations of the intake port, exhaust port, and rotor 130 may be varied to manipulate the flow rate and flow characteristics within the debris chamber 110.

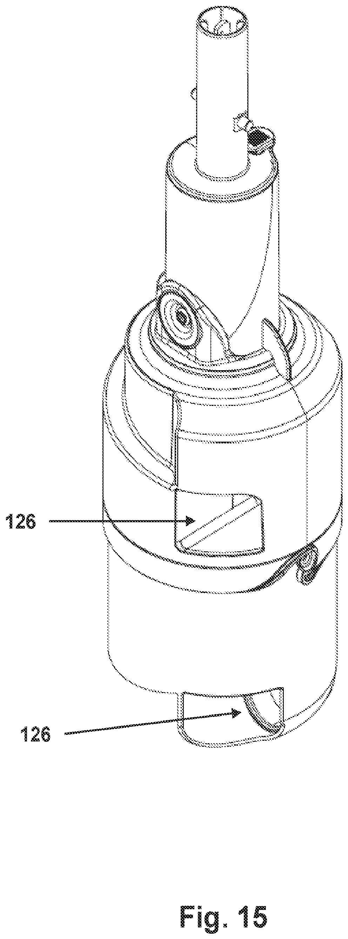

In other embodiments, one or more intake ports can be located on the bottom part of the unit and/or along the side of the debris chamber 110. In multiple intake port embodiments, such as illustrated in Fig. 15, the relative position of the cleaner 10 in the fluid, *i.e*., the depth of insertion of the cleaner 10 into the fluid, may be adjusted either automatically, for example with a buoyancy system, or by the user to change which and/or how many of the intake ports are positioned below the fluid surface.

It should be noted that a buoyancy system may also be used in single intake port embodiments to adjust the position of the cleaner 10 relative to the water surface.

In the illustrated embodiments, the inner end of the intake port 126 delivers fluid and debris to the exterior side of the filter 140. This is an annular space between the outside of the filter 140 and the interior of the debris chamber 110 wall. This annular space is isolated from the exhaust port 112 by the filter 140. Therefore, fluid drawn into the debris chamber 110 must be pulled through the filter 140 before it is exhausted back to the skimmer basket, thereby filtering solid debris from the fluid. As noted above, the drain valves 116 close the drain ports 114 during operation of the portable fluid filtering apparatus 10 to prevent fluid in the debris chamber 110 from escaping through the drain ports 114 before it can be filtered as well as prevent already filtered debris from escaping the debris chamber 110.

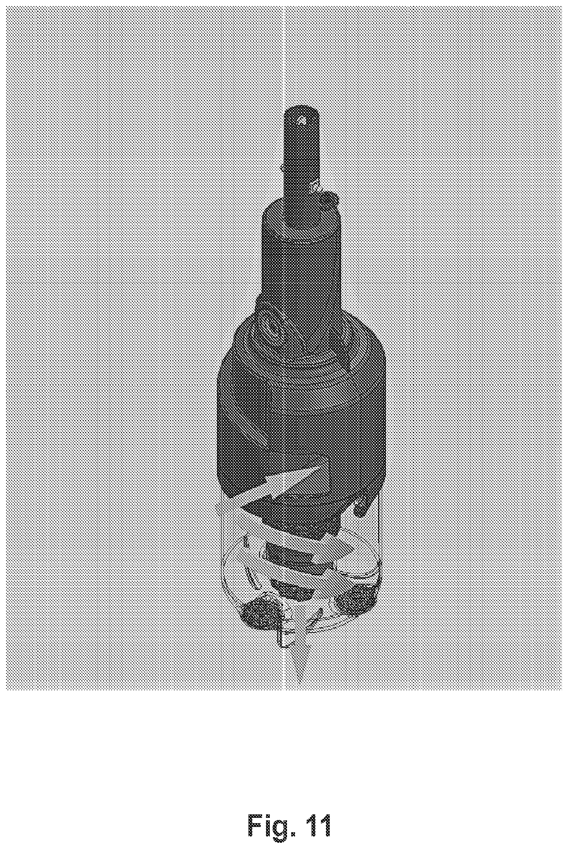

In the illustrated embodiments, the intake port 126 is located at the periphery of the upper shell 120 and follows the outer circumference of the upper shell 120 and debris chamber 110 as it descends toward the interior of the debris chamber 110. Therefore, fluid from the intake port 126 - under the force of the reduced pressure suction generated by the rotor 130 - is induced to swirl around the entire circumference of the debris chamber, creating a vortex-type fluid movement, as generally illustrated in Fig. 11. This flow pattern forces the heavier solid debris toward the outer walls of the debris chamber 110. Advantageously, this flow pattern also tends to minimize contact and adherence of the solid debris against the filter 140, which significantly reduces or eliminates clogging of the filter 140 during operation of the cleaner 10. This in turn maximizes flow efficiency through the debris chamber 110 and increases the effective capacity of the debris chamber 110 to capture and contain solid debris from the fluid before it is necessary to empty the debris chamber 110.

Again, it should be understood that each of the described ports 112, 126 may function as an intake port or an exhaust port depending on the rotational direction of the rotor 130. For example, while the illustrated embodiments show the port 126 as the intake port and the port 112 as the exhaust port, these respective ports may serve in the opposite role if the rotation of the rotor 130 is reversed. In the event that the port 112 serves as the intake port with the other internal components of the cleaner remaining in the same configuration, fluid being taken in may encounter the rotor before passing through the filter system. In some embodiments, the rotor 130 may be located outside of the filter 140, for example, in or as part of the intake port 126.

While the rotor 130 is driven in a rotational direction matching the radial orientation of the intake port 126 in the illustrated embodiments, alternate embodiments may drive the rotor 130 in the opposite rotational direction. Further, in other embodiments using an impeller as the rotor 130, the impeller 130 may be located in a side wall of the debris chamber 110, in which case, the impeller 130 is rotated perpendicular to the orientation of the intake port 126. While the illustrated embodiment tends to provide more efficient flow through the debris chamber, other arrangements of the rotor 130 are possible and contemplated within the scope of the present disclosure.

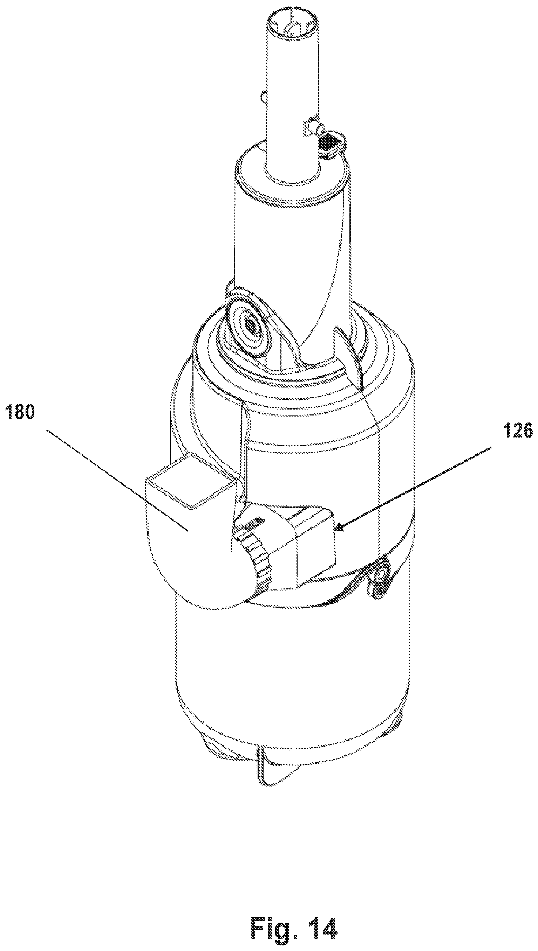

Either port 112, 126 may be provided with an adjustable directional conduit 180 as illustrated in Fig. 14. The directional conduit 180 may be adjusted in one axis or multiple axes to change the direction of intake or exhaust as desired. Adjustment of the directional conduit 180 may occur through user selection or automatically. The direction conduit 180 may alternately comprise a series of adjustable vanes extending across the opening of the port.

The exterior surface of the debris chamber 110 wall may be provided with one or more blades 117 or ribs. The blades 117 act to agitate material within the fluid and prevent solid material from becoming stuck to the bottom surface of the debris chamber 110. The blades 117 may contribute to this circulation pattern. In the illustrated embodiment, the blades 117 may be oriented at an angle on the bottom surface of the debris chamber 110.

A bottom end of the rotor cover 132 adjacent to the port 112 may include a series of curved vanes 138 that reinforce the vortex circulation of the fluid up to the point it is exhausted from the debris chamber 110.

The drive system 200 drives the rotor 130. The drive system 200 includes a motor assembly 210 contained with the motor housing assembly 212. The motor housing assembly 212 may include an intake conduit 214 that continues the flow of fluid from the intake port 126 to the interior of the debris chamber 110. Alternately, the intake conduit 214 may be part of the upper shell 120. The motor assembly 210 includes at least one motor 216, which may, for example, be a 12V 14,500 rpm motor. The motor 216 is connected with and drives the impeller drive shaft 136. In the illustrated embodiment, the motor 216 directly drives the impeller shaft 136, but in alternate embodiments a transmission or gearing may be employed between the motor 216 and impeller drive shaft 136 if appropriate. A power switch 218 controls operation of the motor 216. In the illustrated embodiment, the power switch 218 is a push button switch. However, other switch types or other activation methods may also be used.

The motor 216 is preferably powered by a power source 220. The power source 220 may include a rechargeable battery 222 contained within a battery chamber 224. In the illustrated embodiment, a 2200mAh Li-Ion battery is used. However, other suitable rechargeable batteries may be used. The battery assembly 220 is further provided with a battery charging port 226 to recharge the battery 222. A battery charge port cover 228 may be provided to protect the battery charge port 226 from moisture and contaminants. In an alternate embodiment, induction charging, or some other form of wireless charging, may be used. In alternate embodiments, one or more non-rechargeable batteries may be used in the battery assembly instead of the rechargeable battery 222.

In alternate embodiments, the power source 220 may include a power cord, a removable battery pack, disposable batteries, or photovoltaic cell system, for example, or any combination of the power sources described herein. In those embodiments utilizing rechargeable batteries 222, the photovoltaic cell system may be configured to recharge the batteries 222.

In the illustrated embodiment, both the battery chamber 224 and motor housing 212 are provided with seals to sufficiently isolate the motor 216, battery 222, and associated linkages and electrical components from fluid intrusion.

In alternate embodiments, the battery assembly 220 and motor assembly 210 may be modular in design and allow for rapid swapping out of those components either individually or as a single unit.

In operation, intake/filter/discharge system 100 - or at least the portion of the intake/filter/discharge system 100 that includes the intake port 126 - is lowered into a body of fluid, for example, a skimmer basket until the intake port 126 is at least partially below the fluid line. The power switch 218 may then be actuated to activate the motor 216, which then begins spinning the drive shaft 136 and, in turn, the rotor 130. In some embodiments, activation of the motor 216 may controlled by a water sensor mounted on or within the cleaner 10 and electrically connected with the motor 216. Note that the intake port 126, intake conduit 214, and debris chamber 110 will generally fill with fluid as the intake/filter/discharge system 100 is lowered into the skimmer basket.

The rotation of the rotor 130 is configured to pull fluid within the debris chamber 110 downward and out the exhaust port 112. The exhaust vortex and the debris chamber blades 117 at the bottom surface of the debris chamber 110 then agitate the debris into coming up from the bottom and guide it towards the intake. In doing so, the rotor 130 also creates a region of lower pressure within the debris chamber 110, creating suction that draws more fluid in through the intake port 126. As explained above, the configuration of the intake port 126 and intake conduit 214 creates a circular flow pattern around the outer circumference of the debris chamber 110. Fluid containing debris from the skimmer basket travels around this flow path before it is drawn through the filter 140 and out the exhaust port 112. The solid debris in the fluid is more susceptible to the centrifugal forces created by the high velocity circulation within the debris chamber and, therefore, is pulled away from the filter 140 and towards the outer wall of the debris chamber 110.

The performance of the portable fluid filtering apparatus 10 may be further enhanced by creating a pulsating effect with the motor 216. More particularly, cycling the motor 216 on and off has been found to remove accumulated debris and/or significantly reduce the accumulation of debris at the intake port 126, which can result in the intake port 126 becoming clogged and restricting water flow through the intake port 126. Pulsing the motor 216 allows any accumulated debris to separate and redistribute. The loosened debris may then be more efficiently pulled in through the intake port 126 in a more gradual manner.

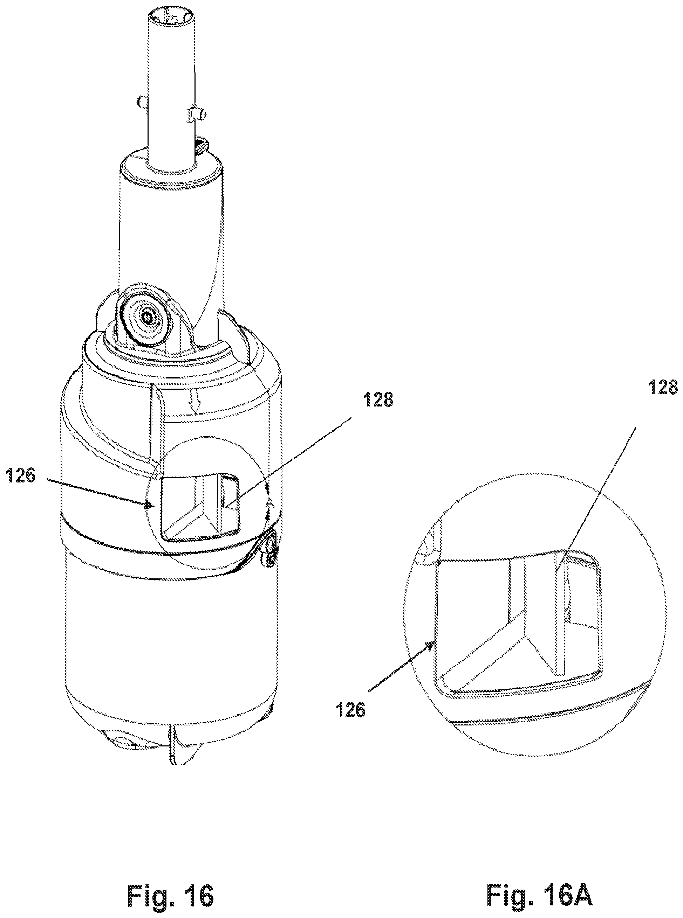

This pulsating feature may be incorporated into any embodiment of the present disclosure. As non-limiting examples, various structures and/or methods to create the pulsating feature may include the following or combinations thereof:
- The portable fluid filtering apparatus 10 may be provided with a current sensor to detect a change in current draw in the motor 216, which then initiates an on/off pulsing cycle in the motor 216.
- The pulsating feature may be incorporated into the motor 216 and/or a motor controller to initiate pulsing of the motor on a set interval. The motor 216 may also be pulsed at different speeds and/or RPMs; the motor pulses may be adjustable by the user; or the motor 216 may be configured to gradually increase its speed from a lower starting speed to an upper target speed and cycle between the lower and upper speeds in a loop.
- The portable fluid filtering apparatus 10 may be provided with a secondary control mechanism to allow a user to manually pulse the motor 216. Alternately, the manual pulsating control may be associated with the power switch 218.
- A water sensor, for example, a laser or a water flow sensor/meter, may be positioned in the intake port 126 to monitor water flow, presence of solid material, or similar conditions to trigger the pulsating feature when a blockage is detected. In addition, the water sensor may more generally initiate and stop operation of the motor 216 during normal operation of the cleaner 10.
- A controlled flow restrictor 128, for example, a swinging/rotating/sliding gate, as illustrated in Figs. 16 and 16A, may be positioned within the intake port 126 to selectively open and close the intake port 126 to water flow based on current flow conditions within the intake port 126. The controlled flow restrictor 128 may be moved into a closed position to block the intake port 126 when a reduced flow of water through the intake port 126 due to accumulated debris is detected. Because the rotor 130 continues to operate while the controlled flow restrictor 128 prevents water from flowing in through the intake port 126, the water level within the debris chamber 110 is reduced and a creates a region of relatively lower pressure on the interior side of the blocked intake port 126. When the controlled flow restrictor 128 is subsequently opened to allow renewed water flow, the lower pressure allows for a rapid increase in the volume of water flow, which also serves to help dislodge accumulated debris.

The controlled flow restrictor 128 may also provide the ability to adjust the general flow rate through the intake port 126 to adapt to different types of debris. For example, filtering of smaller or finer debris, such as pine needles, may be more efficient with a higher velocity flow than the flow required for larger debris. Notably, the use of a more appropriate flow rate from the beginning of operation may also reduce the occurrence of clogging before it even occurs. To control the flow rate through the intake port 126, the controlled flow restrictor 128 may be moved to a partially open or closed position to adjust the size and/or shape of the intake port 126 to produce the desired flow rate. The controlled flow restrictor 128 may be actively or passively changed. In some embodiments, the position of the controlled flow restrictor 128 may be user selectable with a manual or motor driven mechanism. In other embodiments, the position of the controlled flow restrictor 128 may be automatically adjusted through hydrodynamic action. The controlled flow restrictor 128 is shown with a vertical rotational axis but may also be provided with a horizontal rotational axis. As mentioned above, in embodiments in which the controlled flow restrictor 128 is a movable gate may swing or slide father than rotate. Further, other adjustment mechanisms, for example, iris valves, elastomeric valves, etc., may also be used.

Once the body or container of fluid, for example, a skimmer basket, is cleaned of debris, the power switch 218 may be released or actuated to turn the motor 216 off, stopping rotation of the rotor 130 and the intake of fluid through the intake port 126. The intake/filter/discharge system 100 may then be lifted out of the skimmer basket. With the equalization of pressure within the debris chamber 110, the drain valves 116 are able to open under the weight of any remaining fluid in the debris chamber 110 and allow the remaining fluid to drain through the drain ports 114. The operation may be repeated at the next skimmer basket. When the debris chamber 110 is filled with debris, the debris chamber 110 may be removed and emptied. The debris chamber 110 may be manufactured from a clear material or provided with a clear viewing window so that the user can readily monitor the contents of the debris chamber 110.

Embodiments of the apparatus 10 may also be provided with one or more cleaning accessories 150, for example, brushes, on exterior surfaces of the intake/filter/discharge system 100. If provided, these cleaning accessories 150 may assist in removing or loosening debris from the sides of the fluid container that is being filtered. In some embodiments, the user may manually rotate the apparatus 10 within the fluid container in order to apply the cleaning accessories 150 to the sides of the fluid container. In some embodiments, mechanical or electrical elements actively spin the cleaning accessories 150, either with or without rotation of the debris chamber 110. These mechanical or electrical elements may include the drive system 200 or a separate mechanism.

Mounts or mounting brackets 152 may be provided to facilitate attachment of cleaning accessories 150. In some embodiments, the cleaning accessories 150 may be removable and interchangeable with various different accessories provided, for example, brushes, squeegees, fins, sponges, or other devices.

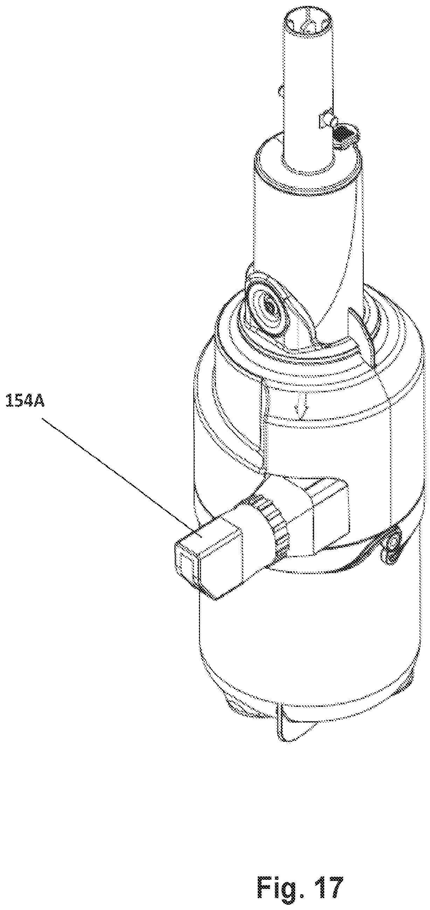

Similarly, the intake port 126 may be provided with a coupler fitting to accommodate attachment of accessory components 154 as illustrated in Figs. 17 - 19. Examples of the accessory components 154 may include a vacuum head, for example, a crevice 154A or brush 154B vacuum head, a flexible hose 154C that may be used with or without a vacuum head attachment, a funnel intake, a screen, a filter, or a flow conditioning element. The accessory components 154 and cleaning accessories 150 may be removable and replaceable. Further, the accessory components 154 and cleaning accessories 150 may be powered, for example, mechanically and/or electrically from the power source 220 of the cleaner 10.

Embodiments of the apparatus 10 may also be provided with a light source 160 to, for example, illuminate the space within the skimmer basket housing during use of the apparatus. The light source 160 may be an LED or use in incandescent, halogen, or any other type of bulb. In preferred embodiments, the light source 160 is powered by the battery 222, photovoltaic cell system, or other source of power utilized by the apparatus 10. While the light source 160 is located in the upper shell 120 in the illustrated embodiments, it may be located anywhere on the apparatus 10 or on multiple positions around the apparatus 10.

## Claims

1. A portable fluid filtering apparatus (10), comprising:
a debris chamber (110) in fluid communication with an exhaust port (112);
a rotor (130) configured to draw in a fluid from outside the debris chamber;
at least one intake port (126) in fluid communication with the debris chamber and wherein the rotor draws the fluid into the debris chamber through the at least one intake port;
a filter (140) in fluid communication with the intake port and the exhaust port; and
a drive system (200) configured to rotate the rotor, the drive system including a drive shaft (136) connected to the rotor, a motor (216) configured to rotate the drive shaft, and a power source (220) for the motor
**characterized in that** an exterior bottom surface of the debris chamber (110) is provided with one or more blades (117),
and **in that** the rotation of the rotor (130) is configured to pull fluid within the debris chamber (110) downward and out the exhaust port (112) such that an exhaust vortex and the blades (117) at the exterior bottom surface of the debris chamber (110) agitate the debris into coming up from the bottom and guide it towards the intake port.

2. The portable fluid filtering apparatus as set forth in claim 1, wherein the rotor (130) is located within the debris chamber (110) adjacent to the exhaust port (112) and the filter (140) surrounds the rotor.

3. The portable fluid filtering apparatus as set forth in claim 1 or 2, further comprising an upper shell (120) mounted on and enclosing a top end of the debris chamber (110) and wherein the at least one intake port (126) is located in the upper shell.

4. The portable fluid filtering apparatus as set forth in any of claims 1 to 3, further comprising a rotor cover (132) surrounding the rotor and the exhaust port.

5. The portable fluid filtering apparatus as set forth in any of claims 1 to 4, wherein the at least one intake port (126) is located relative to and is configured to direct a flow of the fluid into the debris chamber (110) adjacent to the side wall to facilitate a circular flow of the fluid along a perimeter of the side wall.

6. The portable fluid filtering apparatus as set forth in any of claims 1 to 5, further comprising a drain port (114) in the debris chamber, the apparatus optionally further comprising a drain valve (116) positioned within the drain port.

7. The portable fluid filtering apparatus as set forth in any of claims 1 to 6, wherein the power source is a battery (222), the battery being optionally a rechargeable battery with an optional wireless charging system, the battery being optionally a removable battery pack, the apparatus optionally comprising a battery charging port (226).

8. The portable fluid filtering apparatus as set forth in any of claims 1 to 7, wherein the power source is a power cord or a photovoltaic cell system.

9. The portable fluid filtering apparatus as set forth in any of claims 1 to 6, wherein the power source is a rechargeable battery (222) and wherein the apparatus further comprises a photovoltaic cell system configured to operate as the power source and/or a charging source for the rechargeable battery.

10. The portable fluid filtering apparatus as set forth in any of claims 1 to 9, wherein the rotor is an impeller (130), optionally an axial impeller or a radial impeller, or the rotor comprises a propeller.

11. The portable fluid filtering apparatus as set forth in any of claims 1 to 9, wherein the rotor is an auger (130A).

12. The portable fluid filtering apparatus as set forth in any of claims 1 to 11, wherein the rotor (130) is located outside of the filter.

13. The portable fluid filtering apparatus as set forth in any of claims 1 to 12, further comprising at least one cleaning accessory (150), which optionally comprises at least one of a brush or crevice vacuum head (154B, 154A), a flexible hose (154C), a funnel intake, a screen, a filter, or a flow conditioning element, wherein, optionally:
- the at least one cleaning accessory comprises one or more brushes, and/or
- the at least one cleaning accessory is connected with the exhaust port, and/or
- the at least one cleaning accessory is removeable and replaceable, and/or
- the at least one cleaning accessory is powered by the power source (220), and/or
- the at least one cleaning accessory is connected with the at least one intake port (126).

14. The portable fluid filtering apparatus as set forth in any of claims 1 to 13, further comprising a light source (160).

15. The portable fluid filtering apparatus as set forth in any of claims 1 to 14, further comprising a controlled flow restrictor (128) configured for control of a flow of fluid through the at least one intake port (126), the controlled flow restrictor being optionally controlled by hydrodynamic forces through the at least one intake port.

16. The portable fluid filtering apparatus set forth in any of claims 1 to 15, further comprising a water sensor configured to control operation of the motor (216).

17. The portable fluid filtering apparatus as set forth in any of claims 1 to 16, wherein the debris chamber (110) comprises at least two pieces with the at least one intake port (126) being associated with a first of the at least two pieces and the exhaust port (112) being associated with a second of the at least two pieces and wherein the first and second pieces are configured to be assembled together in at least first and second configurations resulting in different relative positioning of the at least one intake port and the exhaust port and wherein the flow of fluid through the apparatus may be reversed to flow from the exhaust port to the at least one intake port upon reversal of a rotational direction of the rotor.

18. The portable fluid filtering apparatus as set forth in any of claims 1 to 17, wherein the filter (140) is positioned between the at least one intake port (126) and the rotor (130) or the rotor is positioned between the at least one intake port and the filter.

19. The portable fluid filtering apparatus as set forth in any of claims 1 to 18, wherein the motor (216) is configured for selective rotation in either direction.

20. The portable fluid filtering apparatus as set forth in any of claims 1 to 19, further comprising at least a second intake port, the intake ports (126) being optionally vertically separated from one another, and the apparatus optionally further comprising a buoyancy system for adjustment of the intake ports relative (126) to a surface of the fluid.

21. The portable fluid filtering apparatus as set forth in any of claims 1 to 20, further comprising a variable exhaust port valve (170).

## Patentansprüche

1. Tragbare Fluidfiltervorrichtung (10), umfassend:
eine Schmutzkammer (110) in fluidischer Verbindung mit einem Austrittanschluss (112);
einen Rotor (130), der konfiguriert ist, um ein Fluid von außerhalb der Schmutzkammer anzusaugen;
mindestens einen Einlassanschluss (126) in fluidischer Verbindung mit der Schmutzkammer, und wobei der Rotor das Fluid durch den mindestens einen Einlassanschluss in die Schmutzkammer saugt;
einen Filter (140) in fluidischer Verbindung mit dem Einlassanschluss und dem Austrittsanschluss; und
ein Antriebssystem (200), das konfiguriert ist, um den Rotor zu drehen, wobei das Antriebssystem eine Antriebswelle (136), die mit dem Rotor verbunden ist, einen Motor (216), der konfiguriert ist, um die Antriebswelle zu drehen, und eine Energiequelle (220) für den Motor beinhaltet,
**dadurch gekennzeichnet, dass** eine äußere Bodenfläche der Schmutzkammer (110) mit einem oder mehreren Schaufeln (117) versehen ist,
und dadurch, dass die Drehung des Rotors (130) konfiguriert ist, um Fluid innerhalb der Schmutzkammer (110) nach unten und aus dem Austrittsanschluss (112) zu ziehen, sodass ein Austrittswirbel und die Schaufeln (117) an der äußeren Bodenfläche der Schmutzkammer (110) den Schmutz so aufwirbeln, dass er von unten nach oben kommt und in den Einlassanschluss geleitet wird.

2. Tragbare Fluidfiltervorrichtung nach Anspruch 1, wobei sich der Rotor (130) innerhalb der Schmutzkammer (110) in der Nähe des Austrittsanschlusses (112) befindet und der Filter (140) den Rotor umschließt.

3. Tragbare Fluidfiltervorrichtung nach Anspruch 1 oder 2, weiter umfassend eine obere Schale (120), die auf ein oberes Ende der Schmutzkammer (110) montiert ist und dieses umschließt, und wobei sich der mindestens eine Einlassanschluss (126) in der oberen Schale befindet.

4. Tragbare Fluidfiltervorrichtung nach einem der Ansprüche 1 bis 3, weiter umfassend eine Rotorabdeckung (132), die den Rotor und den Austrittsanschluss umschließt.

5. Tragbare Fluidfiltervorrichtung nach einem der Ansprüche 1 bis 4, wobei der mindestens eine Einlassanschluss (126) relativ zur Seitenwand angeordnet und konfiguriert ist, um einen Strom des Fluids in die Schmutzkammer (110) in der Nähe der Seitenwand zu lenken, um einen kreisförmigen Strom des Fluids entlang eines Umfangs der Seitenwand zu ermöglichen.

6. Tragbare Fluidfiltervorrichtung nach einem der Ansprüche 1 bis 5, weiter umfassend einen Ablassanschluss (114) in der Schmutzkammer, wobei das Gerät optional weiter ein Ablassventil (116) umfasst, das innerhalb des Ablassanschlusses positioniert ist.

7. Tragbare Fluidfiltervorrichtung nach einem der Ansprüche 1 bis 6, wobei die Energiequelle eine Batterie (222) ist, wobei die Batterie optional eine wiederaufladbare Batterie mit optionalem drahtlosem Ladesystem ist, wobei die Batterie optional ein herausnehmbares Batteriepack ist, wobei das Gerät optional einen Batterieladeanschluss (226) umfasst.

8. Tragbare Fluidfiltervorrichtung nach einem der Ansprüche 1 bis 7, wobei die Energiequelle ein Netzkabel oder ein Photovoltaikzellensystem ist.

9. Tragbare Fluidfiltervorrichtung nach einem der Ansprüche 1 bis 6, wobei die Energiequelle eine wiederaufladbare Batterie (222) ist, und wobei das Gerät weiter ein Photovoltaikzellensystem umfasst, das konfiguriert ist, um als Energiequelle und/oder Ladequelle für die wiederaufladbare Batterie zu dienen.

10. Tragbare Fluidfiltervorrichtung nach einem der Ansprüche 1 bis 9, wobei der Rotor ein Laufrad (130) ist, optional ein Axiallaufrad oder ein Radiallaufrad, oder der Rotor einen Propeller umfasst.

11. Tragbare Fluidfiltervorrichtung nach einem der Ansprüche 1 bis 9, wobei der Rotor eine Förderschnecke (130A) ist.

12. Tragbare Fluidfiltervorrichtung nach einem der Ansprüche 1 bis 11, wobei der Rotor (130) außerhalb des Filters angeordnet ist.

13. Tragbare Fluidfiltervorrichtung nach einem der Ansprüche 1 bis 12, weiter umfassend mindestens ein Reinigungszubehör (150), das optional mindestens eines von einer Bürste oder einem Fugensaugerkopf (154B, 154A), einem flexiblen Schlauch (154C), einem Trichteransaugstutzen, einem Sieb, einem Filter oder einem Strömungsformungselement umfasst, wobei optional:
- das mindestens eine Reinigungszubehör eine oder mehrere Bürsten umfasst und/oder
- das mindestens eine Reinigungszubehör mit dem Austrittsanschluss verbunden ist, und/oder
- das mindestens eine Reinigungszubehör entfernt und ersetzt werden kann, und/oder
- das mindestens eine Reinigungszubehör von der Stromquelle (220) gespeist wird; und/oder
- das mindestens eine Reinigungszubehör mit dem mindestens einen Einlassanschluss (126) verbunden ist.

14. Tragbare Fluidfiltervorrichtung nach einem der Ansprüche 1 bis 13, weiter umfassend eine Lichtquelle (160).

15. Tragbare Fluidfiltervorrichtung nach einem der Ansprüche 1 bis 14, weiter umfassend eine gesteuerte Durchflussbegrenzung (128), die konfiguriert ist, um einen Strom von Fluid durch den mindestens einen Einlassanschluss (126) zu steuern, wobei die gesteuerte Durchflussbegrenzung optional durch hydrodynamische Kräfte durch den mindestens einen Einlassanschluss gesteuert wird.

16. Tragbare Fluidfiltervorrichtung nach einem der Ansprüche 1 bis 15, weiter umfassend einen Wassersensor, der konfiguriert ist, um den Betrieb des Motors (216) zu steuern.

17. Tragbare Fluidfiltervorrichtung nach einem der Ansprüche 1 bis 16, wobei die Schmutzkammer (110) mindestens zwei Teile umfasst, wobei der mindestens eine Einlassanschluss (126) einem ersten der mindestens zwei Teile zugewiesen ist, und der Austrittsanschluss (112) einem zweiten der mindestens zwei Teile zugewiesen ist, und wobei der erste und der zweite Teil konfiguriert sind, um in mindestens eine erste und eine zweite Konfiguration zusammengefügt zu werden, was zu einer verschiedenen relativen Positionierung des mindestens einen Einlassanschlusses und des Austrittsanschlusses führt, und wobei der Strom von Fluid durch das Gerät umgekehrt werden kann, um bei einer Umkehr einer Rotationsrichtung des Rotors aus dem Austrittsanschluss in den mindestens einen Einlassanschluss zu fließen.

18. Tragbare Fluidfiltervorrichtung nach einem der Ansprüche 1 bis 17, wobei der Füllkörper (140) zwischen dem mindestens einen Einlassanschluss (126) und dem Rotor (130) positioniert ist oder der Rotor zwischen dem mindestens einen Einlassanschluss und dem Filter positioniert ist.

19. Tragbare Fluidfiltervorrichtung nach einem der Ansprüche 1 bis 18, wobei der Motor (216) für eine selektive Rotation in beide Richtungen konfiguriert ist.

20. Tragbare Fluidfiltervorrichtung nach einem der Ansprüche 1 bis 19, weiter umfassend mindestens einen zweiten Einlassanschluss, wobei die Einlassanschlüsse (126) optional vertikal voneinander getrennt sind, und die Vorrichtung optional weiter ein Auftriebssystem umfasst, um die Einlassanschlüsse (126) relativ zu einer Flüssigkeitsoberfläche einzustellen.

21. Tragbare Fluidfiltervorrichtung nach einem der Ansprüche 1 bis 20, weiter umfassend ein variables Austrittsanschlussventil (170).

## Revendications

1. Appareil de filtration de fluide portatif (10) comprenant :
une chambre de débris (110) en communication de fluide avec un orifice d'échappement (112) ;
un rotor (130) configuré pour aspirer un fluide de l'extérieur de la chambre de débris ;
au moins un orifice d'admission (126) en communication de fluide avec la chambre de débris et dans lequel le rotor aspire le fluide dans la chambre de débris par le au moins un orifice d'admission ;
un filtre (140) en communication de fluide avec l'orifice d'admission et l'orifice d'échappement ; et
un système d'entraînement (200) configuré pour faire tourner le rotor, le système d'entraînement comprenant un arbre d'entraînement (136) raccordé au rotor, un moteur (216) configuré pour faire tourner l'arbre d'entraînement, et une source d'alimentation (220) pour le moteur,
**caractérisé en ce qu'**une surface inférieure extérieure de la chambre de débris (110) est prévue avec une ou plusieurs aubes (117),
et **en ce que** la rotation du rotor (130) est configurée pour tirer le fluide dans la chambre de débris (110) vers le bas et sortir par l'orifice d'échappement (112) de sorte qu'un tourbillon d'échappement et les aubes (117) au niveau de la surface inférieure extérieure de la chambre de débris (110) agitent les débris pour qu'ils remontent par le bas et les guident vers l'orifice d'admission.

2. Appareil de filtration de fluide portatif selon la revendication 1, dans lequel le rotor (130) est situé dans la chambre de débris (110) adjacente à l'orifice d'échappement (112) et le filtre (140) entoure le rotor.

3. Appareil de filtration de fluide portatif selon la revendication 1 ou 2, comprenant en outre une coque supérieure (120) montée sur et enfermant une extrémité supérieure de la chambre de débris (110) et dans lequel le au moins un orifice d'admission (126) est situé dans la coque supérieure.

4. Appareil de filtration de fluide portatif selon l'une quelconque des revendications 1 à 3, comprenant en outre un couvercle de rotor (132) entourant le rotor et l'orifice d'échappement.

5. Appareil de filtration de fluide portatif selon l'une quelconque des revendications 1 à 4, dans lequel le au moins un orifice d'admission (126) est situé par rapport à et est configuré pour diriger un écoulement du fluide dans la chambre de débris (110) adjacente à la paroi latérale afin de faciliter un écoulement circulaire du fluide le long d'un périmètre de la paroi latérale.

6. Appareil de filtration de fluide portatif selon l'une quelconque des revendications 1 à 5, comprenant en outre un orifice de drain (114) dans la chambre de débris, l'appareil comprenant en outre facultativement une valve de drain (116) positionnée dans l'orifice de drain.

7. Appareil de filtration de fluide portatif selon l'une quelconque des revendications 1 à 6, dans lequel la source d'alimentation est une batterie (222), la batterie étant facultativement une batterie rechargeable avec un système de chargement sans fil facultatif, la batterie étant facultativement un bloc-batterie amovible, l'appareil comprenant en outre un orifice de chargement de batterie (226).

8. Appareil de filtration de fluide portatif selon l'une quelconque des revendications 1 à 7, dans lequel la source d'alimentation est un cordon d'alimentation ou un système de cellule photovoltaïque.

9. Appareil de filtration de fluide portatif selon l'une quelconque des revendications 1 à 6, dans lequel la source d'alimentation est une batterie rechargeable (222) et dans lequel l'appareil comprend en outre un système de cellule photovoltaïque configuré pour servir de source d'alimentation et/ou de source de chargement pour la batterie rechargeable.

10. Appareil de filtration de fluide portatif selon l'une quelconque des revendications 1 à 9, dans lequel le rotor est un impulseur (130), facultativement un impulseur axial ou un impulseur radial, ou le rotor comprend une hélice.

11. Appareil de filtration de fluide portatif selon l'une quelconque des revendications 1 à 9, dans lequel le rotor est une tarière (130A).

12. Appareil de filtration de fluide portatif selon l'une quelconque des revendications 1 à 11, dans lequel le rotor (130) est situé à l'extérieur du filtre.

13. Appareil de filtration de fluide portatif selon l'une quelconque des revendications 1 à 12, comprenant en outre au moins un accessoire de nettoyage (150) qui comprend facultativement au moins l'un parmi une brosse ou une tête de vide à fente (154B, 154A), un tuyau flexible (154C), une admission d'entonnoir, un crible, un filtre ou un élément de conditionnement de flux, dans lequel, facultativement :
- le au moins un accessoire de nettoyage comprend une ou plusieurs brosses, et/ou
- le au moins un accessoire de nettoyage est raccordé à l'orifice d'échappement, et/ou
- le au moins un accessoire de nettoyage est amovible et remplaçable, et/ou
- le au moins un accessoire de nettoyage est alimenté par la source d'alimentation (220), et/ou
- le au moins un accessoire de nettoyage est raccordé avec le au moins un orifice d'admission (126).

14. Appareil de filtration de fluide portatif selon l'une quelconque des revendications 1 à 13, comprenant en outre une source lumineuse (160).

15. Appareil de filtration de fluide portatif selon l'une quelconque des revendications 1 à 14, comprenant en outre un limiteur d'écoulement contrôlé (128) configuré pour contrôler un écoulement de fluide à travers le au moins un orifice d'admission (126), le limiteur d'écoulement contrôlé étant facultativement contrôlé par des forces hydrodynamiques à travers le au moins un orifice d'admission.

16. Appareil de filtration de fluide portatif selon l'une quelconque des revendications 1 à 15, comprenant en outre un capteur d'eau configuré pour contrôler le fonctionnement du moteur (216).

17. Appareil de filtration de fluide portatif selon l'une quelconque des revendications 1 à 16, dans lequel la chambre de débris (110) comprend au moins deux pièces avec le au moins un orifice d'admission (126) associé avec une première des au moins deux pièces et l'orifice d'échappement (112) associé à une deuxième des au moins deux pièces et dans lequel les première et deuxième pièces sont configurées pour être assemblées dans au moins des première et deuxième configurations se traduisant par le positionnement relatif différent du au moins un orifice d'admission et un orifice d'échappement et dans lequel l'écoulement de fluide à travers l'appareil peut être inversé pour s'écouler de l'orifice d'échappement vers le au moins un orifice d'admission suite à l'inversion d'une direction de rotation du rotor.

18. Appareil de filtration de fluide portatif selon l'une quelconque des revendications 1 à 17, dans lequel le filtre (140) est positionné entre le au moins un orifice d'admission (126) et le rotor (130) ou le rotor est positionné entre le au moins un orifice d'admission et le filtre.

19. Appareil de filtration de fluide portatif selon l'une quelconque des revendications 1 à 18, dans lequel le moteur (216) est configuré pour la rotation sélective dans chaque direction.

20. Appareil de filtration de fluide portatif selon l'une quelconque des revendications 1 à 19, comprenant en outre au moins un deuxième orifice d'admission, les orifices d'admission (126) étant facultativement verticalement séparés l'un de l'autre, et l'appareil comprenant en outre facultativement un système de flottabilité pour l'ajustement des orifices d'admission (126) par rapport à une surface du fluide.

21. Appareil de filtration de fluide portatif selon l'une quelconque des revendications 1 à 20, comprenant en outre une valve d'orifice d'échappement variable (170).
